(19) Europäisches Patentamt
European Patent Office
Office européen des brevets

(11) EP 2 922 900 B1

(12) **EUROPÄISCHE PATENTSCHRIFT**

(45) Veröffentlichungstag und Bekanntmachung des Hinweises auf die Patenterteilung:
09.08.2017 Patentblatt 2017/32

(21) Anmeldenummer: **13792877.6**

(22) Anmeldetag: **12.11.2013**

(51) Int Cl.:
*C08J 9/00* (2006.01)       *C08J 9/10* (2006.01)
*C08K 5/14* (2006.01)       *C08L 23/08* (2006.01)
*C08L 31/04* (2006.01)      *C08L 33/04* (2006.01)
*C08L 9/00* (2006.01)       *B29C 44/18* (2006.01)

(86) Internationale Anmeldenummer:
**PCT/EP2013/073537**

(87) Internationale Veröffentlichungsnummer:
**WO 2014/079723 (30.05.2014 Gazette 2014/22)**

(54) **THERMISCH EXPANDIERBARE ZUBEREITUNGEN**

THERMALLY EXPANDABLE FORMULATIONS

PRÉPARATIONS THERMIQUEMENT EXPANSIBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2012 DE 102012221192**

(43) Veröffentlichungstag der Anmeldung:
**30.09.2015 Patentblatt 2015/40**

(73) Patentinhaber: **Henkel AG & Co. KGaA**
**40589 Düsseldorf (DE)**

(72) Erfinder:
• **KOHLSTRUNG, Rainer**
**68723 Plankstadt (DE)**
• **YAMADA, Takehito**
**69117 Heidelberg (DE)**

(56) Entgegenhaltungen:
**WO-A1-2008/034755      US-A1- 2002 120 024**

**Beschreibung**

Die vorliegende Anmeldung betrifft eine thermisch expandierbare Zubereitung, die ein spezielles peroxidisch vernetzbares binäres Copolymer, ein Polymer auf Basis von einem oder mehreren Dienmonomeren sowie ein spezielles Terpolymer enthält, Schottteile zur Abdichtung von Hohlräumen, die diese Zubereitung enthalten, ein Verfahren zur Herstellung derartiger Schottteile sowie ein Verfahren zum Abdichten von Hohlräumen in Bauteilen unter Verwendung derartiger Schottteile.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräusche zu mindern und somit den Fahrkomfort im Fahrzeug zu steigern.

Derartige Hohlräume enthaltende Rahmen- und Karosserieteile können beispielsweise aus halbschaligen Bauteilen vorgefertigt werden, die zu einem späteren Zeitpunkt durch Schweißen, Nieten, Clinchen und/oder Kleben zu dem geschlossenen Hohlprofil gefügt werden. Bei derartiger Bauweise ist der Hohlraum im frühen Aufbauzustand einer Fahrzeugkarosserie folglich leicht zugänglich, so dass abdichtende und akustisch dämpfende Schottteile in dieser Phase des Rohbaus durch mechanisches Einhängen, durch Einstecken in entsprechende Haltevorrichtungen, Bohrungen oder durch Anschweißen fixiert werden können. Weiterhin können derartige Hohlprofile aus Stahl-, Aluminium- oder Kunststoffwerkstoffen im Strangpressverfahren, durch Hydroforming, durch Druckguss- oder durch Zieh-Verfahren hergestellt werden. Die resultierenden Hohlräume sind nur noch durch die Querschnittsöffnungen am Ende dieser Profile zugänglich.

Schottteile, die eine abdichtende und/oder akustische Wirkung in derartigen Hohlräumen bewirken, werden häufig als "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zubereitungen enthalten.

Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

Sowohl der Aufbau und die Geometrie derartiger Schottteile als auch die Zusammensetzung der thermisch expandierbaren Zubereitungen sind dabei Parameter, die in jüngster Zeit immer weiter optimiert wurden. Üblicherweise werden Schottteile verwendet, die aus einer thermisch expandierbare Masse und einem Trägermaterial bestehen und in ihrer Geometrie an den zu dämpfenden Hohlkörper individuell angepasst sind.

Da die Fertigung von zweikomponentigen Schottteilen aus Trägermaterial und expandierbarer Masse sehr aufwändig ist, besteht bereits seit längerem das Bedürfnis Schottteile zu entwickeln, die auch ohne das Vorhandensein einer Trägerstruktur den Hohlraum zuverlässig abdichten ohne während der Aushärtung abzulaufen. Gleichzeitig besteht das Bedürfnis, Schäume mit hohen Expansionsraten zur Verfügung zu stellen, aus denen universell einsetzbare Schottteile - idealer Weise ohne Trägermaterial - geformt werden können, die durch die hohe Expansion in der Lage sind, Hohlräume mit unterschiedlichen Geometrien zuverlässig abzudichten.

So beschäftigt sich beispielsweise die WO-A1-2001/30906 mit selbst-tragenden thermisch expandierbaren Massen und schlägt vor, dass die Massen vor der Expansion mindestens ein modifiziertes Polyethylen, mindestens ein Hydrazid-Treibmittel, mindestens ein Kohlenwasserstoffharz und mindestens einen Schwefel-haltigen Härter enthalten. Die Mittel gemäß dieser Schrift zeichnen sich durch Expansionsraten von bis zu 1000% aus.

Weiterhin wird in der WO-A1-2008/034755 vorgeschlagen, thermisch härtbare Massen mit hohem Expansionsraten aus mindestens einem Anhydrid-funktionalisiertem Thermoplasten, einem Aminfunktionalisiertem latenten Härter und mindestens einem latenten Treibmittel herzustellen, die vorzugsweise mit einem Trägermaterial zum Einsatz kommen.

Aufgabe der vorliegenden Erfindung war es, thermisch expandierbare Massen zur Verfügung zu stellen, die ohne Träger auskommen und gleichzeitig hohe Expansionsraten aufweisen, so dass die aus diesen Massen gefertigten Schottteile universell in verschiedenen Hohlraumstrukturen eingesetzt werden können.

Ferner sollen die erfindungsgemäßen Massen den Anforderungen im Härtungsprozess der Automobilindustrie, der üblicherweise während der Passage des produzierten Fahrzeugs durch den Ofen zur Aushärtung der kathodischen Tauchlackierung stattfindet, gut gewachsen sein.

Bei einer derartigen Härtung besteht das Problem, dass nicht alle Teile des Fahrzeugs im Härtungsofen auf die gleiche Temperatur erhitzt werden. So können einige Bereiche während der Härtung dichter an die Heizquelle kommen und somit höheren Temperaturen ausgesetzt sein ("Überbrand").

Andere Bereiche können hingegen konstruktionsbedingt gegen die Hitze abgeschirmt sein und nicht die optimale Härtungstemperatur erreichen ("Unterbrand"). So sind insbesondere die Bereiche in den strukturellen Hohlräumen häufig von dicken Metallwänden abgeschirmt und werden aufgrund der sie umgebenden Masse nicht auf die optimalen Temperaturen erhitzt, das heißt, diese Bereiche erreichen wenn dann nur kurzzeitig maximale Temperaturen, die meist dann auch noch deutlich unter den optimalen Bedingungen liegen. Dementsprechend ist es vorteilhaft, wenn die thermisch expandierbaren Zubereitungen derart beschaffen sind, dass sie über einen weiten Temperaturbereich und auch bei unterschiedlichen Härtungszeiten ausreichend stark expandieren und insbesondere bei höheren Temperaturen nicht wieder in sich zusammenfallen. Die Mittel des Standes der Technik konnten bisher noch nicht alle Anforderungen an derartige Schottteile vollständig erfüllen.

Nunmehr wurde gefunden, dass thermisch expandierbare Zubereitungen, die ein spezielles peroxidisch vernetzbares binäres Copolymer, ein Polymers auf Basis von einem oder mehreren Dienmonomeren und zusätzlich ein spezielles Terpolymer enthalten, die an derartige thermisch expandierbare Zubereitungen gestellten Anforderungen in einem hohem Maße erfüllen. Die erfindungsgemäßen Zubereitungen weisen eine hohe Standhaftigkeit während der zur Härtung/Expansion notwenigen Erhitzung des Materials auf und ermöglichen somit auch die Erzielung hoher Expansionsgrade, gegebenenfalls sogar unter Verzicht auf jedwedes Trägermaterials, ohne dass die Zubereitungen unter dem Einfluss der Schwerkraft von der Einbringstelle abrutschen oder nach unten abkippen.

Ein erster Gegenstand der vorliegenden Erfindung sind daher thermisch expandierbare Zubereitungen, enthaltend, bezogen auf die Gesamtmasse der thermisch expandierbaren Zusammensetzung,

(a) mindestens 40 Ges.-% mindestens eines peroxidisch vernetzbaren Copolymers, enthaltend mindestens eine Monomereinheit ausgewählt aus Vinylacetat, (Meth)acrylsäuren und deren Derivaten, wobei das binäre Copolymer einem Schmelzflussindex von höchstens 3g/10min, welcher gemäß DIN EN ISO 1133 und mit einer Prüflast von 2,16kg und einer Prüftemperatur von 190°C bestimmt wird, aufweist,

(b) 0,2 bis 2 Gew.-% mindestens eines Peroxids,

(c) 5 bis 18 Ges.-% mindestens eines chemischen Treibmittels sowie

(d) 2 bis 20 Gew.-% mindestens eines Polymers auf Basis von einem oder mehreren Dienmonomeren, das einen Schmelzflussindex von mindestens 2g/10min, welcher gemäß DIN EN ISO 1133 und mit einer Prüflast von 2,16 kg und einer Prüftemperatur von 150 °C bestimmt wird, aufweist, und

(e) mindestens ein Terpolymer auf Basis mindestens eines ersten Monomers, ausgewählt aus den einfach oder mehrfach ungesättigten Kohlenwasserstoffen, und mindestens eines zweiten Monomers, ausgewählt aus den (Meth)acrylsäuren und deren Derivaten.

Eine erste erfindungswesentliche Komponente ist das peroxidisch vernetzbare binäre Copolymer, enthaltend mindestens eine Monomereinheit ausgewählt aus Vinylacetat, (Meth)acrylsäuren und deren Derivaten, mit einem Schmelzflussindex von höchstens 3g/10min. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift. Unter "binären Copolymeren" werden erfindungsgemäß alle Copolymere verstanden, die aus einer Polymerisationsreaktion aus zwei voneinander verschiedenen Monomeren hervorgehen. Selbstverständlich sollen hierbei erfindungsgemäß auch solche Copolymere umfasst sein, in deren Polymerkette weitere Monomere, beispielsweise durch Abbaureaktionen oder Verunreinigungen, in derart geringen Mengen eingebaut sind, so dass diese die Eigenschaften des binären Copolymeren nicht beeinflussen.

Das erfindungsgemäße peroxidisch vernetzbare binäre Copolymer enthält mindestens eine Monomereinheit ausgewählt aus Vinylacetat, (Meth)acrylsäuren und deren Derivaten. Dabei bedeutet wie üblich der Vorsatz "(Meth)" vor "Acrylat", dass es sich bei diesen Monomeren sowohl um Acrylsäuren und/oder deren Derivate als auch um Methacrylsäuren und/oder deren Derivate handeln kann. Besonders bevorzugte Monomereinheiten dieser Gruppe sind Vinylacetat, Butylacrylat, Methylacrylat, Ethylacrylat und 2-Ethylhexylacrylat. Vinylacetat ist erfindungsgemäß ein besonders bevorzugter Vertreter dieser Gruppe.

Das zweite Monomer des erfindungsgemäßen binären Copolymers (a) ist vorzugsweise ausgewählt aus den Alkenen. Ethylen ist ein besonders bevorzugtes zweites Monomer des binären Copolymers (a) im Sinne der vorliegenden Erfindung.

In einer ersten bevorzugten Ausführungsform ist das mindestens eine peroxidisch vernetzbare binäre Copolymer ausgewählt aus Ethylen-Vinylacetat-Copolymeren, funktionalisierten Ethylen-Vinylacetat-Copolymeren, Ethylen-Butylacrylat-Copolymeren, funktionalisierten Ethylen-Butylacrylat-Copolymeren, Ethylen-Methylacrylat-Copolymeren, Ethylen-Ethylacrylat-Copolymeren, Ethylen-(Meth)acrylsäure-Copolymeren und Ethylen-2-Ethylhexylacrylat-Copolymeren.

Unter einem "funktionalisierten Copolymeren" wird dabei erfindungsgemäß ein Copolymer verstanden, das mit zusätzlichen Hydroxidgruppen, Carboxygruppen, Anhydridgruppen, Acrylatgruppen und/oder Glycidylmethacrylat-Gruppen, vorzugsweise an den Kettenenden, versehen ist.

Besonders vorteilhaft im Sinne der vorliegenden Erfindung sind Ethylen-Vinylacetat-Copolymere, Ethylen-Butylacrylat-Copolymere sowie deren funktionalisierte Derivate. Ethylen-Vinylacetat-Copolymere, insbesondere die Vertreter, die keine Funktionalisierung aufweisen, können erfindungsgemäß ganz besonders bevorzugt sein.

Ferner zeichnen sich die erfindungsgemäßen peroxidisch vernetzbaren binären Copolymer durch einen Schmelzflussindex von höchstens 3g/10min aus. Der Schmelzflussindex der peroxidisch vernetzbaren Polymere wird erfindungsgemäß in einem Schmelzflussmessgerät bestimmt, wobei das Polymer bei 190°C in einem beheizbaren Zylinder aufgeschmolzen und unter einem durch die Auflagelast (2,16kg) entstehenden Druck durch eine definierte Standarddüse gedrückt wird (DIN EN ISO 1133). Ermittelt wird die austretende Masse als Funktion der Zeit.

Peroxidisch vernetzbare Polymere, insbesondere ein gegebenenfalls funktionalisiertes Ethylen-Vinylacetat-Copolymer, mit einem Schmelzflussindex von 0,05g bis 2,5g/10min, insbesondere von 0,1g bis 2,0g/10min, sind erfindungsgemäß besonders bevorzugt.

Thermisch expandierbare Zubereitungen, die mindestens ein Ethylen-Vinylacetat-Copolymer mit einem Vinylacetatanteil von 9 bis 22 Gew.-%, insbesondere von 15 bis 20Gew.-%, ganz besonders von 17,5 bis 19Gew.-%, bezogen auf die Gesamtmasse des binären Copolymeren, enthalten, sind erfindungsgemäß besonders bevorzugt.

Die thermisch expandierbaren Zubereitungen enthalten erfindungsgemäß mindestens 40Gew.-% mindestens eines oder mehrerer der erfindungsgemäßen peroxidisch vernetzbaren binären Copolymere (a). Thermisch expandierbare Zubereitungen, die 50 bis 80Gew.-%, insbesondere 58 bis 62Gew.-%, mindestens eines oder mehrerer der peroxidisch vernetzbaren binären Copolymeren (a), jeweils bezogen auf die Gesamtmasse der thermisch expandierbaren Zubereitung, enthalten, sind besonders bevorzugt.

Als zweite erfindungswesentliche Komponente enthalten die erfindungsgemäßen thermisch expandierbaren Zubereitungen mindestens ein Peroxid. Erfindungsgemäß sind insbesondere die organischen Peroxide, wie beispielsweise Ketonperoxide, Diacylperoxide, Perester, Perketale und Hydroperoxide bevorzugt. Besonders bevorzugt sind beispielsweise Cumylhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), und 4,4-Di-tert-butylperoxy-n-butylvalerate.

Besonders bevorzugt sind erfindungsgemäß die beispielsweise kommerziell von den Firmen Akzo Nobel und Pergan GmbH vertriebenen Peroxide, wie 3,3,5,7,7-Pentamethyl-1,2,4-trioxepan, 2,5-Dimethyl-2,5-di(tert-butylperoxy)hex-3-in, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid.

Es hat sich weiterhin als erfindungsgemäß vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es erfindungsgemäß, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Es kann erfindungsgemäß besonders bevorzugt sein, Di(tert-butylperoxyisopropyl)benzol als Peroxid einzusetzen; dies ist beispielsweise unter den Handelsbezeichnungen Perkadox® 14-40 B-PD oder Perkadox® 14-40 K PD von der Firma Akzo Nobel oder unter den Handelsbezeichnung Peroxan® BIB 40 GS oder Peroxan® BIB 40 P von der Firma Pergan kommerziell erhältlich.

In einer weiteren erfindungsgemäß Form kann es ebenso bevorzugt sein, Dicumylperoxid, wie es beispielsweise unter den Handelsbezeichnungen Perkadox® BC 40 K PD, Perkadox® BC 40BGR DD oder Perkadox® BC 40 B PD von der Firma Akzo Nobel oder unter den Handelsbezeichnungen Peroxan® DC 40 GS, Peroxan® DC 40 P oder Peroxan® DC 40 PK von der Firma Pergan vertrieben wird, einzusetzen. Der Einsatz von Dicumylperoxid kann erfindungsgemäß ganz besonders bevorzugt sein.

Ferner ist es erfindungsgemäß vorteilhaft, wenn das mindestens eine oder die Peroxide in einer auf einen festen inerten Träger, wie beispielsweise Calciumcarbonat und/oder Silica und/oder Kaolin aufgebrachten Form eingesetzt werden.

Das mindestens eine oder die Peroxide sind in den erfindungsgemäßen thermisch expandierbaren Zubereitungen in einer Menge von 0,2 bis 2Gew.-%, vorzugsweise in einer Menge von 0,3 bis 1 Gew.-%, insbesondere in einer Menge von 0,4 bis 0,6Gew.-%, jeweils bestimmt als Aktivsubstanzgehalt an Peroxid bezogen auf die Gesamtmasse der thermisch expandierbaren Zubereitung, enthalten.

Als dritte erfindungswesentliche Komponente enthalten die thermisch expandierbaren Zubereitungen mindestens ein chemisches Treibmittel.

Unter einem chemischen Treibmittel werden erfindungsgemäß Verbindungen verstanden, die sich bei Einwirkung von Wärme zersetzen und dabei Gase freisetzen.

Beispiele für geeignete chemische Treibmittel sind Azoverbindungen, Hydrazidverbindungen, Nitrosoverbindungen und Carbazidverbindungen, wie beispielsweise Azobisisobutyronitril, Azodicarbonamid (ADCA), Di-nitroso-pentamethylentetramin, 4,4'-Oxybis(benzolsulfonsäure hydrazid) (OBSH), Azocyclohexylnitril, Azodiaminobenzol, Benzol-1,3-sulfonylhydrazid, Calciumazid, 4,4'-Diphenyldisulfonylazid, Diphenyl-sulfon-3,3'-disulfohydrazid, Benzol-1,3-disulfohydrazid, Trihydrazinotriazin, p-Toluolsulfonylhydrazid and p-Toluolsulfonylsemicarbazid. Erfindungsgemäß bevorzugt hat sich der Einsatz von Azodicarbonamid und/oder Sulfonsäurehydrazid erwiesen. Bevorzugte Sulfonsäurehydrazide sind insbesondere 4,4'-Oxybis(benzolsulfonsäurehydrazid) (OBSH), Benzol-1,3-sulfonsäurehydrazid und 4-Methylbenzolsulfonsäurehydrazid. Azodicarbonamid ist ein erfindungsgemäß ganz besonders bevorzugtes chemisches Treibmittel.

Es kann erfindungsgemäß bevorzugt sein, wenn die thermisch expandierbaren Zubereitungen ein erstes Treibmittel, das bereits unterhalb von 140°C aktiviert wird, und ein zweites Treibmittel, das erst bei Temperaturen oberhalb von 160°C aktiviert wird, enthalten. Erfindungsgemäß haben sich Zubereitungen als vorteilhaft erwiesen, die einen Gehalt von chemischen Treibmitteln von 5 bis 18Gew.-%, insbesondere von 7 bis 15Gew.-%, ganz besonders von 9 bis 13Gew.-%, jeweils bezogen auf die Gesamtmasse der thermisch expandierbaren Zubereitung, enthalten.

Die erfindungsgemäßen chemischen Treibmittel können vorteilhafter Weise in Kombination mit Aktivatoren und/oder Beschleunigern, wie beispielsweise Zinkverbindungen (beispielsweise Zinkoxid, Zinkstearat, Zink-di-toluolsulfinat, Zink-di-benzolsulfinat), Magnesiumoxid und/oder (modifizierten) Harnstoffen zum Einsatz kommen. Die Zinkverbindungen, insbesondere Zinkoxid, sind erfindungsgemäß besonders bevorzugt.

Dabei spielt es erfindungsgemäß keine wesentliche Rolle, ob die Treibmittel bereits in aktivierter Form eingesetzt werden oder, ob die thermisch expandierbaren Zubereitungen zusätzlich zu dem Treibmittel einen entsprechenden Aktivator und/oder Beschleuniger, wie beispielsweise Zinkoxid enthalten.

Es hat sich als besonders vorteilhaft erwiesen, wenn die erfindungsgemäßen thermisch expandierbaren Zubereitungen die Aktivatoren und/oder Beschleuniger, insbesondere die Zinkverbindungen, ganz besonders das Zinkoxid, in einer Menge von 0 bis 15Gew.-%, insbesondere von 0,2 bis 5Gew.-%, ganz besonders bevorzugt von 1 bis 3 Gew.-%, jeweils bezogen auf die Gesamtmasse der thermisch expandierbaren Zubereitung enthalten.

Ferner haben sich Zubereitungen als vorteilhaft erwiesen, die einen Gehalt von bereits aktiviertem Azodicarbonamid von 5 bis 18Gew.-%, insbesondere von 7 bis 15Gew.-%, ganz besonders von 9 bis 13Gew.-%, jeweils bezogen auf die Gesamtmasse der thermisch expandierbaren Zubereitung, aufweisen, wobei das eingesetzte aktivierte Azodicarbonamid einen Gehalt an Aktivatoren von 1 bis 10 Gew.-%, bezogen auf die Menge an aktiviertem Azodicarbonamid, aufweist.

Als vierten erfindungswesentlichen Bestandteil enthalten die thermisch expandierbaren Zubereitungen mindestens ein Polymer auf Basis von einem oder mehreren Dienmonomeren.

Obwohl prinzipiell hinsichtlich der Dienmonomere keinerlei Einschränkungen bestehen, hat es sich erfindungsgemäß als vorteilhaft erwiesen, wenn ein Polymer auf Basis mindestens eines Alkadienmonomers eingesetzt wird. Homopolymere auf Basis eines Dienmonomeren können erfindungsgemäß besonders bevorzugte Polymere (d) sein.

Obwohl in der Regel der Einsatz von nicht-funktionalisierten Polymeren (d) bevorzugt ist, können die Polymere (d) in Ausnahmefällen durchaus auch mit zusätzlichen Hydroxidgruppen, Carboxygruppen, Anhydridgruppen, Acrylatgruppen und/oder Glycidylmethacrylat-Gruppen, vorzugsweise an den Kettenenden, funktionalisiert sein.

Erfindungsgemäß besonders bevorzugte Dienmonomere sind 1,2-Butadien, 1,3-Butadien sowie Isopren. 1,3-Butadien und Isopren sind erfindungsgemäß ganz besonders bevorzugte Dienmonomere.

Weiterhin haben sich Polymere (d) als erfindungsgemäß bevorzugt erwiesen, die eine mittlere Molmasse von mindestens 30 000g/mol aufweisen. Polymere (d) mit einer mittleren Molmasse von mindestens 50 000 g/mol können erfindungsgemäß besonders bevorzugt sein. Als mittlere Molmasse von Polymeren wird in diesem Zusammenhang die gewichtsmittlere Molmasse ($M_w$) verstanden, die mittels Gelpermeationschromatographie (GPC) mit Polystyrol als Standard bestimmt werden kann.

Besonders vorteilhafte Eigenschaften konnten erhalten werden, wenn das Polymer (d) ausgewählt ist aus der Gruppe gebildet von den Polybutadienhomopolymeren, den Polyisoprenhomopolymeren sowie den Butadien-Isoprencopolymeren. So zeichnen sich erfindungsgemäße Zubereitungen, die diese Polymere (d) aufweisen, durch ein gutes Injektionsverhalten im Spritzguss, eine gute Standfestigkeit sowie geringes Ablaufen während der Härtung aus.

Weiterhin ist es erfindungsgemäß bevorzugt, wenn das Polymer (d) 1,3-Butadien als Monomerbestandteil enthält.

Ferner sind solche Polybutadiene auf Basis von 1,3-Butadien erfindungsgemäß bevorzugt, die mindestens 90mol-% 1,2-Verknüpfungen aufweisen. Derartige Polybutadiene werden erfindungsgemäß auch als 1,2-Polybutadiene bezeichnet.

Ebenfalls bevorzugt kann es sein, wenn das Polymer (d) syndiotaktisch aufgebaut ist. Syndiotaktisches 1,2-Polybutadien ist ein ganz besonders bevorzugtes Polymer (d) im Sinne der vorliegenden Erfindung.

Es ist ferner erfindungsgemäß besonders bevorzugt, wenn die Komponente (d) bei Raumtemperatur fest ist. Dabei werden Polymere erfindungsgemäß als "fest" bezeichnet, wenn die Geometrie dieser Polymere sich bei der angegebenen Temperatur innerhalb von 1 Stunde, insbesondere innerhalb von 24 Stunden, nicht unter dem Einfluss der Schwerkraft verformt. Eingesetzt werden erfindungsgemäß solche Polymere auf Basis von einem oder mehreren Dienmonomeren, die einen Schmelzflussindex von mindestens 2g/10min, insbesondere von 2 bis 10g/10min, ganz besonders von 3 bis 7g/10min, aufweisen. Der Schmelzflussindex der Komponente (d) wird erfindungsgemäß in einem Schmelzflussmessgerät bestimmt, wobei das Polymer bei 150°C in einem beheizbaren Zylinder aufgeschmolzen und unter einem durch die Auflagelast (2,16kg) entstehenden Druck durch eine definierte Standarddüse gedrückt wird (DIN EN ISO 1133). Ermittelt wird die austretende Masse als Funktion der Zeit. Erfindungsgemäß haben sich Zubereitungen als vorteilhaft erwiesen, die einen Gehalt von Polymeren auf Basis von einem oder mehreren Dienmonomeren von 2 bis 20Gew.-%, insbesondere von 3 bis 20Gew.-%, ganz besonders von 4 bis 7Gew.-%, jeweils bezogen auf die Gesamtmasse der thermisch expandierbaren Zubereitung, enthalten.

Als fünfte erfindungswesentliche Komponente enthalten die thermisch expandierbaren Zubereitungen mindestens ein Terpolymer, auf Basis mindestens eines ersten Monomers, ausgewählt aus den einfach oder mehrfach ungesättigten Kohlenwasserstoffen, und mindestens eines zweiten Monomers, ausgewählt aus den (Meth)acrylsäuren und deren Derivaten.

Es hat sich erfindungsgemäß als bevorzugt erwiesen, wenn die erste Monomereinheit des Terpolymers ein einfach oder mehrfach ungesättigter acyclischer Kohlenwasserstoff ist; Alkene und Diene sind besonders bevorzugte Vertreter dieser Gruppe; die Monomereinheiten Ethylen, Propylen, 1,2-Butadien, 1,3-Butadien und Isopren sind erfindungsgemäß ganz besonders bevorzugte Vertreter dieser Gruppe.

Das zweite Comonomer des Terpolymers ist ausgewählt aus (Meth)acrylsäure und deren Derivaten. Dabei bedeutet wie üblich der Vorsatz "(Meth)" vor "Acrylat", dass es sich bei diesen Monomeren sowohl um Acrylsäuren und/oder Acrylsäureester als auch um Methacrylsäuren und/oder Methacrylsäureester handeln kann. Sofern das erfindungsgemäße Terpolymer Acrylsäureester und/oder Methacrylsäureester enthält, ist die Alkoholkomponente des Esters vorzugsweise ausgewählt aus solchen, die 1 bis 6 C-Atome enthalten. Insbesondere können Methylester, Ethylester und Butylester eingesetzt werden.

In einer bevorzugten Ausführungsform der vorliegenden Erfindung ist das dritte Comonomer der Komponente (e) ausgewählt aus der Gruppe gebildet von Styrol, Glycidyl(meth)acrylsäureestern und Maleinsäureanhydrid.

Unter Glycidyl(meth)acrylsäureestern werden erfindungsgemäß die Ester der Acrylsäure beziehungsweise Methacrylsäure mit Glycidol (2,3-Epoxypropan-1-ol) verstanden.

Ein besonders gutes Ablaufverhalten konnte erfindungsgemäß erzielt werden, wenn als Terpolymer (e)

- Styrol-Butadien-(Meth)acrylatsäuren,
- Styrol-Butadien-(Meth)acrylsäureester,
- Ethylen-(Meth)acrylsäureester-Glycidyl(meth)acrylsäureester und/oder
- Ethylen-(Meth)acrylsäureester-Maleinsäureanhydride, wie insbesondere Ethylen-Ethylacrylat-Maleinsäureanhydrid und Ethylen-Butylacrylat-Maleinsäureanhydrid

eingesetzt werden.

Auch wenn die Komponente (e) erfindungsgemäß als Terpolymer definiert wird, sollen selbstverständlich auch solche Copolymere erfindungsgemäß mit umfasst sein, die noch weitere Monomere, beispielsweise aus Abbaureaktionen oder Verunreinigungen, in derart geringen Mengen enthalten, dass diese die Eigenschaften der erfindungsgemäßen Terpolymere nicht beeinflussen.

Der Einsatz der erfindungsgemäßen Terpolymere in den erfindungsgemäßen Zubereitungen ermöglicht eine bessere Standhaftigkeit der Zubereitungen während der zur Härtung/Expansion notwendigen Erhitzung des Materials. Außerdem wurde überraschenderweise gefunden, dass der Einsatz dieser Terpolymere eine gleichmäßige Expansion auch bei unterschiedlichen Temperaturen ermöglicht, d.h. dass der Expansionsgrad von Zubereitungen, die diese Terpolymere enthalten, bei Unterbrand-, Ideal- und Überbrandbedingungen weniger stark variiert als bei herkömmlichen Zubereitungen.

Neben den erfindungswesentlichen Komponenten können die thermisch expandierbaren Zubereitungen in einer speziellen Ausführungsform mindestens ein niedermolekulares multifunktionelles Acrylat enthalten.

Unter einem "niedermolekularen multifunktionellen Acrylat" wird erfindungsgemäß eine Verbindung verstanden, die mindestens zwei Acrylatgruppen aufweist und ein Molgewicht unterhalb von 2400g/mol, vorzugsweise unterhalb von 800g/mol, aufweist.

Erfindungsgemäß haben sich insbesondere derartige Verbindungen als vorteilhaft erwiesen, die zwei, drei oder mehr Acrylatgruppen pro Molekül aufweisen.

Bevorzugte difunktionelle Acrylate sind Ethylenglycol-Dimethacrylat, Diethylenglycol-Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol- Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Erfindungsgemäß hat es sich als besonders vorteilhaft erwiesen, wenn die thermisch expandierbaren Zubereitungen mindestens ein niedermolekulares multifunktionelles Acrylat ausgewählt ist aus Triethylenglykoldiacrylat, Trimethylolpropantriacrylat (TMPTA) und Trimethylolpropantrimethacrylat (TMPTMA) enthalten.

Die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4Gew.-%, jeweils bezogen auf die Gesamtmasse der thermisch expandierbaren Zubereitung enthalten.

Ein Einsatz der niedermolekularen multifunktionellen Acrylate hat sich erfindungsgemäß als besonders vorteilhaft für die Stabilität des resultierenden Schaums erwiesen, wenn die thermisch expandierbaren Zubereitungen entweder wenig Terpolymer (e) oder wenig Peroxid enthalten. Insbesondere bei Zubereitungen mit einem Peroxidgehalt von höchstens 1,5Gew.-% und/oder einem Terpolymergehalt von höchstens 3Gew.-% erweist sich die Zugabe von niedermolekularen Acrylaten als besonders vorteilhaft.

Im Laufe der dieser Anmeldung zu Grunde liegenden Arbeiten konnte aber auch gezeigt werden, dass die thermisch expandierbaren Zubereitungen hinsichtlich ihres Verhaltens bei nicht-optimalen Härtungstemperaturen weiter optimiert werden können, wenn sie im Wesentlichen frei von diesen niedermolekularen multifunktionellen Acrylaten formuliert werden. Als "im Wesentlichen frei von diesen niedermolekularen multifunktionellen Acrylaten" werden Zusammensetzungen bezeichnet, die weniger als 0,25Gew.-%, insbesondere weniger als 0,15Gew.-% niedermolekulare multifunktionelle Acrylate enthalten. Thermisch expandierbare Zusammensetzungen, die frei von niedermolekularen multifunktionellen Acrylaten formuliert sind können erfindungsgemäß ganz besonders bevorzugt sein.

In einer weiteren Ausführungsform der vorliegenden Erfindung kann es bevorzugt sein, wenn die thermisch expandierbare Zusammensetzungen weiterhin mindestens ein Kohlenwasserstoffharz enthalten.

Als "Kohlenwasserstoffharze" werden erfindungsgemäß thermoplastische Polymere bezeichnet, die aus Erdölfraktionen gewonnen werden können und eine mittlere Molmasse von höchstens 2500g/mol aufweisen. Kohlenwasserstoffharze mit einer mittleren Molmasse von höchstens 2000g/mol können erfindungsgemäß besonders bevorzugt sein. Als mittlere Molmasse von Polymeren wird im Rahmen der vorliegenden Anmeldung generell die gewichtsmittlere Molmasse verstanden. Im Rahmen der vorliegenden Erfindung kann das gewichtsmittlere Molekulargewicht ($M_w$) mittels Gelpermeationschromatographie (GPC) mit Polystyrol als Standard bestimmt werden. Die Kohlenwasserstoffharze können völlig aliphatisch oder völlig aromatisch sein oder sie können aliphatische und aromatische Strukturen aufweisen. Weiterhin kann es sich um aromatisch modifizierte aliphatische Harze handeln. Wesentlich ist in jedem Fall die Verträglichkeit mit der Polymermatrix. Hiefür können Handelsprodukte wie beispielsweise Escorez®1102, Escorez®2173, Escorez®2184, Escorez®2101, Escorez® 2105, Novares® TK, Novares® TL 100, Novares® TV, Novares® TA, Novares® TP, Novares® TR, Novares® TS, Novares® TW, Necires® LF 220 und Nevtac® 10 eingesetzt werden.

Kohlenwasserstoffharze mit einem Erweichungspunkt > 10 °C, vorzugsweise mit einem Erweichungspunkt > 40 °C und insbesondere mit einem Erweichungspunkt > 70 °C sind erfindungsgemäß besonders bevorzugt.

Die Kohlenwasserstoffharze sind in den thermisch expandierbaren Zubereitungen vorzugsweise in einer Menge von 0,2 bis 25 Gew.-%, insbesondere von 5 bis 20 Gew.-%, ganz besonders bevorzugt von 8 bis 15 Gew.-%, jeweils bezogen auf die Gesamtmasse der thermisch expandierbaren Zubereitung enthalten.

Die erfindungsgemäßen thermisch expandierbaren Zubereitungen zeichnen sich insbesondere dadurch aus, dass sie auch bei hohen Expansionsraten während des Härtungsvorgangs nicht unter dem Einfluss der Schwerkraft von der Einbringstelle abrutschen oder während der Expansion nach unten abkippen. Sie expandieren vielmehr an dem Ort, an dem sie in den Hohlraum eingebracht wurden, und dehnen sich in Richtung der gegenüberliegenden Wände des Hohlraums aus. Daher ist es erfindungsgemäß besonders bevorzugt, wenn die thermisch expandierbaren Zubereitungen einen Expansionsgrad von mindestens 1000%, vorzugsweise von mindestens 1500%, insbesondere von mindestens 2000% aufweisen. Der angegebene Expansionsgrad bezieht sich also auf das Volumen der Masse bei Raumtemperatur vor und nach 30-minütigem Erhitzen auf eine Aktivierungstemperatur von 170°C.

Neben den erfindungsgemäßen Bestandteilen können die thermisch expandierbaren Massen noch weitere übliche Komponenten, wie beispielsweise Farbstoffe, Füllstoffe und Antioxidantien enthalten.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff.

Die Füllstoffe werden vorzugsweise in einer Menge von 0 bis 16Gew.-%, insbesondere von 0,1 bis 10Gew.-%, jeweils bezogen auf die Masse der gesamten thermisch expandierbaren Zubereitung eingesetzt.

Farbgebende Komponenten, insbesondere schwarze Farbstoffe auf Basis von Rußen, sind in den erfindungsgemäßen thermisch expandierbaren Zubereitungen vorzugsweise in einer Menge von 0 bis 2Gew.-%, insbesondere von 0,1 bis 0,8Gew.-%, ganz besonders bevorzugt 0,15 bis 0,4Gew.-%, jeweils bezogen auf die Masse der gesamten thermisch expandierbaren Zubereitung enthalten.

Als Antioxidantien oder Stabilisatoren können beispielsweise sterisch gehinderte Phenole und/oder sterisch gehinderte Thioether und/oder sterisch gehinderte aromatische Amine eingesetzt werden, wie beispielsweise Bis-(3,3-bis-(4'-hydroxy-3-tert. butylphenyl) butansäure)-glykolester.

Antioxidantien oder Stabilisatoren sind in den erfindungsgemäßen thermisch expandierbaren Zubereitungen vorzugsweise in einer Menge von 0 bis 0,5Gew.-%, insbesondere von 0,1 bis 0,3Gew.-%, jeweils bezogen auf die Masse der gesamten thermisch expandierbaren Zubereitung enthalten.

Die erfindungsgemäßen thermisch expandierbaren Zubereitungen sind vorzugsweise derart formuliert, dass sie bei 22°C fest sind. Eine thermisch expandierbare Zubereitung wird erfindungsgemäß als "fest" bezeichnet, wenn die Geometrie dieser Zubereitung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zubereitungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des Peroxids und/oder des Treibmittelgemischs bewirken. Die resultierende thermisch expandierbare Zubereitung kann unmittelbar nach ihrer Herstellung in Form gebracht werden, beispielsweise durch Blasformen, Pelletierung, Spritzgussverfahren, Formpressverfahren, Stanzverfahren oder Extrusion.

Obwohl es erfindungsgemäß bevorzugt sein kann, die gesamte thermisch expandierbare Zubereitung herzustellen, zu extrudieren und beispielsweise in Pelletform bis zur Herstellung der Schottteile zu lagern, hat es sich weiterhin erfindungsgemäß als vorteilhaft erwiesen, die thermisch expandierbare Zubereitung bis zu ihrer thermischen Verformung als Zweikomponentenmittel zu formulieren.

Diese Zweikomponentenmittel umfassen vorzugsweise eine erste Komponente, die einen geringen Anteil der Gesamtmenge an peroxidisch vernetzbarem Polymer sowie alle übrigen Komponenten enthält. Diese erste Komponente kann separat gefertigt und gelagert werden. Diese Trennung der Gesamtzubereitung in zwei Komponenten ermöglicht eine kostenoptimierte Herstellung der Schottteile, da sämtliche kritischen Bestandteile in der ersten Formulierung enthalten sind, die ein geringeres Gewicht als die endgültige thermisch expandierbare Zubereitung aufweist. Vorzugsweise sind maximal 20% der Gesamtmenge des peroxidisch vernetzbaren Polymeren in der ersten Komponente enthalten. Die zweite Komponente enthält dann die restliche Menge des Polymeren so wie gegebenenfalls weitere Hilfsstoffe und Additive. Es kann erfindungsgemäß bevorzugt sein, wenn die zweite Komponente nur die Restmenge des Polymers enthält.

Vor der Herstellung der Schottteile kann dann das Zweikomponentenmittel in einer Spritzgussmaschine mit Doppelschnecke miteinander vermischt und anschließend in die gewünschte Form injiziert werden. Es ist aber erfindungsgemäß auch möglich, das Zweikomponentenmittel zunächst zu der vollständigen thermisch expandierbaren Zubereitung zu vermischen, zu pelletieren, und die pelletierte Gesamtzubereitung dann in einem separaten Schritt in die Formen zu injizieren

Die Expansion der thermisch expandierbaren Zubereitung erfolgt durch Erhitzung, wobei die Zubereitung für eine bestimmte Zeit auf eine bestimmte Temperatur erhitzt wird, die ausreichend ist, um die Aktivierung des Treibmittels sowie des Peroxids zu bewirken.

In Abhängigkeit von der Zusammensetzung der Zubereitung und den Bedingungen der Fertigungslinie liegen derartige Temperaturen üblicherweise im Bereich von 130°C bis 240°C, vorzugsweise 150°C bis 200°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zubereitungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zubereitungen der vorliegenden Erfindung können in einem weiten Bereich von Dichtungs- und Klebstoffapplikationen zum Einsatz kommen, beispielsweise im Bereich der Schottteile zur Abdichtung von Hohlräumen in Fahrzeugen. Aber auch ein Einsatz als Unterfütterungsklebstoff, beispielsweise im Tür oder Dachbereich ist denkbar. Für einen derartigen Einsatzzweck können die erfindungsgemäßen thermisch expandierbaren Zubereitungen mittels Direktextrusion appliziert werden. Die Zubereitungen können aber auch in extrudierter Form an den Anwendungsort gebracht werden und dort durch Erwärmen des Stahls aufgepresst und angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zubereitung eine zweite klebrige Zubereitung in einer dünnen Schicht aufgebracht. Diese zweite klebrige Schicht dient im Rahmen dieser Ausführungsform dazu, das Formteil im Rohbau zu fixieren.

Die thermisch expandierbaren Zubereitungen sind dementsprechend besonders für die Herstellung von Schottteilen zur Hohlraumabdichtung geeignet, d.h. zur Herstellung von Teilen, die in die Hohlräume von Fahrzeugen eingesetzt werden, anschließend durch Erhitzung expandieren und gleichzeitig aushärten und auf diese Weise den Hohlraum möglichst vollständig abdichten.

Ein zweiter Gegenstand der vorliegenden Erfindung ist dementsprechend ein Schottteil zum Abdichten von Hohlräumen eines Bauteils, das eine Form aufweist, die an den Hohlraum angepasst ist, und eine erfindungsgemäße thermisch expandierbare Zubereitung aufweist.

Unter einer "Form, die an den Hohlraum angepasst ist" werden dabei erfindungsgemäß alle Geometrien von Schottteilen verstanden, die nach der Expansion eine vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs des Materials, in den Hohlraum ausreichen, um nach der Expansion eine vollständige Abdichtung des Hohlraums zu gewährleisten.

Derartige Schottteile werden aus den erfindungsgemäßen thermisch expandierbaren Zubereitungen üblicherweise durch Spritzgusstechniken hergestellt. Dabei werden die thermisch expandierbaren Zubereitungen auf Temperaturen im Bereich von 70 bis 90°C erhitzt und dann in eine entsprechend ausgebildete Form injiziert.

Es ist erfindungsgemäß bevorzugt, wenn die Schottteile mindestens ein Befestigungselement aufweisen, das die Verankerung des Schottteils in dem Hohlraum ermöglicht.

In einer besonders bevorzugten Ausführungsform dieses Gegenstandes der vorliegenden Erfindung sind die Schottteile vollständig aus der thermisch expandierbaren Zubereitung gefertigt. So kann die Zubereitung beispielsweise mittels eines Spritzgussverfahrens, durch Ausstanzen aus einer vorgefertigten Platte oder durch Extrusion durch eine Matrize mit anschließendem Ablängen in die gewünschte Form des Schottteils gebracht werden. Eine Verwendung eines Trägermaterials ist in dieser Ausführungsform nicht erforderlich.

In dieser Ausführungsform sind Befestigungselemente integraler Bestandteil des Schottteils, das heißt, diese sind ebenfalls aus der thermisch expandierbaren Zubereitung gefertigt. Derartige Befestigungselemente können die Form einer Ausbuchtung annehmen und somit dazu beitragen, dass das Schottteil an der für es vorgesehenen Stelle im Hohlraum verbleibt.

So können die Befestigungselemente beispielsweise derart ausgestaltet sein, dass sie in eine Öffnung des Hohlraums eingeführt werden können, wobei sie vorzugsweise so ausgestaltet werden, dass sie nicht wieder aus der Öffnung entfernt werden können (beispielsweise durch die Verwendung von Haken oder geeigneten Erhöhungen). Dabei ist es besonders bevorzugt, wenn die Befestigungselemente aus der thermisch expandierbaren Zubereitung gefertigt sind, da diese im Zuge der Expansion durch die Erhitzung auch diese Öffnungen vollständig verschließt.

In einer anderen Ausführungsform dieses Gegenstandes der vorliegenden Erfindung ist nur der Hauptbestandteil des Schottteils aus der thermisch expandierbaren Zubereitung gefertigt.
Die Schottteile dieser Ausführungsform enthalten zusätzlich zu dem expandierbaren Hauptteil Befestigungselemente aus einem anderen nicht-expandierbaren Material, wie beispielsweise Metall oder Hitze-resistentem Kunststoff. So kann beispielsweise ein Pin oder ein zusammendrückbarer Stopfen als Befestigungselement an einer Kante in der thermisch expandierbaren Zubereitung verankert sein, der in eine Öffnung des abzudichtenden Hohlraumes eingeführt werden kann.

Obwohl die erfindungsgemäßen thermisch expandierbaren Massen eine Fertigung von Schottteilen ohne Trägermaterial erlauben, können diese dennoch auch in herkömmlicher Art und Weise mit Träger zum Einsatz kommen. In dieser Ausführungsform weist das Schottteil einen Träger auf, auf den die thermisch expandierbare Zubereitung aufgebracht wird. Der Träger kann in dieser Ausführungsform dazu genutzt werden, den expandierenden Schaum in Richtung der Wände des Hohlraums zu dirigieren, um ein Zusammensacken oder eine sonstige ungewünschte Verformung des Schaumes zu vermeiden. Die Menge der thermisch expandierbaren Zubereitung in dem Schottteil wird vorzugsweise so gewählt, dass das aufgeschäumte Material den Zwischenraum zwischen Schottteil und Hohlraumwänden vollständig ausfüllt und somit den Hohlraum versiegelt und die Übertragung von Geräuschen verhindert.

Der Träger besteht vorzugsweise aus einem thermoplastischen Material, das unter normalen Anwendungsbedingungen ausreichend bruchstabil ist und einen Schmelz- oder Erweichungspunkt aufweist, der oberhalb der Aushärtungstemperatur des Bauteils liegt. Vorzugsweise ist der Träger aus einer Vielzahl von polymeren Materialien, wie beispielsweise Polyestern, aromatischen Polyethern, Polyetherketonen und insbesondere Polyamiden, wie beispielsweise Nylon-66, gefertigt. Das Trägermaterial kann zusätzlich zu den polymeren Bestandteilen weitere Additive und Füllstoffe enthalten, wie beispielsweise Farbstoff und/oder verstärkende Fasern. Alternativ kann der Träger auch aus Metall, wie beispielsweise Stahl oder Aluminium gefertigt sein.

Die thermisch expandierbare Zubereitung kann gemeinsam mit dem Träger durch herkömmliche Verfahren hergestellt werden. Insbesondere Spritzgussverfahren, bei denen beide Komponenten injiziert werden, sind besonders vorteilhaft. Es ist aber erfindungsgemäß auch bevorzugt, wenn das Trägermaterial in einem separaten Schritt gespritzt wird und erst anschließend in einem separaten Schritt, gegebenenfalls sogar mittels einer separaten Maschine, die thermisch expandierbare Zusammensetzung auf den Träger aufgebracht wird.

Die erfindungsgemäßen Schottteile können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote.

Ein weiterer Gegenstand der vorliegenden Erfindung ist ein Verfahren zur Abdichtung von Hohlräumen eines Bauteils, wobei ein erfindungsgemäßes Schottteil in den Hohlraum eingebracht wird und anschließend auf eine Temperatur oberhalb von 130°C erhitzt wird, so dass die thermisch expandierbare Zubereitung expandiert und den Hohlraum abdichtet.

Bezüglich der Details dieses Gegenstandes der vorliegenden Erfindung gilt mutatis mutandis das zu den anderen Gegenständen bereits Gesagte.

Ein weiterer Gegenstand der vorliegenden Erfindung ist die Verwendung eines erfindungsgemäßen Schottteils zur akustischen Abdichtung von Hohlräumen in Bauteilen und/oder zur Abdichtung von Hohlräumen in Bauteilen gegen Wasser und/oder Feuchtigkeit.

Bezüglich der Details dieses Gegenstandes der vorliegenden Erfindung gilt mutatis mutandis das zu den anderen Gegenständen bereits Gesagte.

*1 Herstellung der Formulierungen*

In einem Knetmischer wurden zunächst die Rohstoffe Escorene® Ultra UL 00218 CC 3 und RB 810 entsprechend der Vorgaben aus Tabelle 1 bei 130°C gemischt bis eine homogene Masse vorlag. Anschließend wurden die übrigen Rohstoffe nacheinander zugegeben, wobei der Mischer gekühlt wurde, so dass die Mischung sich nicht auf Temperaturen oberhalb von 99°C erwärmte.

*2 Bestimmung der Expansion*

Zur Bestimmung der Expansion wurden aus den gefertigten Platten Prüfkörper mit den Dimensionen 240mm x 240mm x 6mm geschnitten, diese in einen Umluftofen eingeführt, dieser auf die in Tabelle 1 genannte Temperatur erhitzt (Aufheizzeit ca. 7 bis 10 min) und die Prüfkörper dann für den in Tabelle 1 genannten Zeitraum bei dieser Temperatur belassen. Die Expansion bei 170°C entspricht dabei den idealen Bedingungen, die im Rahmen der Aushärtung im Fahrzeugbau erzielt werden. Die Expansion bei 150°C simuliert die Unterbrandbedingungen, die Expansion bei 190°C die Überbrandbedingungen.

Das Ausmaß der Expansion wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser ermittelt.

*3 Bestimmung des Ablaufverhaltens*

Zur Bestimmung des Ablaufverhaltens wurden aus gefertigten Platten Prüfkörper mit den Dimensionen 10mm x 10mm x 4mm geschnitten und in einem Umluftofen für 5 min bei 100 °C auf ein waagerechtes beöltes Blech (Feuerzink, Beölung mit 3 g/m$^2$) aufgeschmolzen. Nach dem Abkühlen wird das so vorbereitete Blech senkrecht für 30 min bei 175 °C in einem Umluftofen eingebracht, so dass das Produkt expandiert. Nach Entnahme des Blechs aus dem Ofen und anschließendem Abkühlen wurde das Ablaufen beziehungsweise Abkippen des entstandenen Schaums im Vergleich zur Ausgangsposition beurteilt.

*4 Formulierungen und Messergebnisse*

4.1 Tabellarische Übersicht

Die Mengenangaben verstehen sich, sofern nichts anderes vermerkt ist, in Gewichtsprozent.

Tabelle 1:

| | VV1 | VV2 | VV3 | VV4 | E1 | E2 | E3 |
|---|---|---|---|---|---|---|---|
| Elvax® 470A | 71,1 | 69,8 | 73,9 | 71,4 | -- | 59,4 | 58,9 |
| Escorene® Ultra UL 00218 CC 3 | -- | -- | -- | -- | 59,4 | -- | -- |
| RB 810 | 2,8 | 5,00 | -- | 2,8 | 5,0 | 5,0 | 5,0 |
| Novares® TL 100 | 10,5 | -- | 10,8 | 10,4 | 10,4 | 10,4 | 10,5 |
| Necires® LF 220 | -- | 10,5 | -- | -- | -- | -- | -- |
| Zink Oxide Activox® B | 2,8 | 2,8 | 2,9 | 2,8 | 2,7 | 2,7 | 2,8 |
| Monarch® 280 | 0,2 | 0,2 | 0,2 | 0,2 | 0,2 | 0,2 | 0,2 |
| Perkadox® BC 40BGR DD | 0,6 | 0,6 | 0,6 | 1,3 | 1,3 | 1,3 | 1,3 |
| Celogen® AZ 130 | 11,1 | 11,1 | 11,6 | 11,1 | 11,1 | 11,1 | 11,1 |
| Lotader® AX 8900 | -- | -- | -- | -- | 9,9 | 9,9 | 10,0 |
| Sartomer® SR 350 | 0,9 | -- | -- | -- | -- | -- | 0,2 |
| SUMME | 100 | 100 | 100 | 100 | 100 | 100 | 100 |
| Expansion bei 30 min @ 150 °C [%] | 1500-1600 | 1500-1600 | 1200-1300 | 1200-1300 | 1800-1900 | 1600-1700 | 1400-1500 |
| Expansion bei 30 min @ 170 °C [%] | 1400-1500 | 1400-1500 | 200-300 | 2000-2100 | 2500-2600 | 2100-2200 | 1950-2000 |
| Expansion bei 30 min @190 °C [%] | 500 - 600 | 750 - 800 | 200-300 | 800 - 900 | 2400-2500 | 1800-1900 | 1700-1800 |
| Ablaufverhalten | kein Ablaufen, kein Abkippen | starkes Ablaufen starkes Abkippen | starkes Ablaufen | starkes Ablaufen | kein Ablaufen, kein Abkippen | kein Ablaufen, kein Abkippen | kein Ablaufen, kein Abkippen |

EP 2 922 900 B1

4.2 Verzeichnis der eingesetzten Handelsprodukte

| Celogen® AZ 130 | Azodicarbonamid (Firma Safic Alcan) |
| Elvax® 470A | Ethylen-Vinylacetat-Copolymer, (ca. 18Gew.-% Vinylacetatanteil im Copolymeren, Schmelzpunkt 89°C, Schmelzflussindex 0,7g/10Min bei 190°C und einer Belastung mit 2,16kg) (Firma DuPont) |
| Escorene® Ultra UL 00218 CC 3 | Ethylen-Vinylacetat-Copolymer, (ca. 18Gew.-% Vinylacetatanteil im Copolymeren, Schmelzpunkt 86°C, Schmelzflussindex 1,7g/10Min bei 190°C und einer Belastung mit 2,16kg) (Firma Exxon Mobil) |
| Lotader® AX 8900 | Terpolymer aus Ethylen, Acrylsäureester und Glycidylmethacrylat mit zufälliger Anordnung (Acrylsäureestergehalt 24 Gew.-%, Glycidylmethacrylatgehalt 8 Gew.-%) (Firma Arkema) |
| Monarch® 280 | Carbon Black (Reinheitsgrad von mind. 99%) (Firma Cabot) |
| Necires® LF 220 | Kohlenwasserstoffharz; Polymerisationsprodukt aus cycloaliphatischen und alkylaromatischen Monomeren (Firma Rüttgers Chemicals) |
| Novares® TL 100 | Kohlenwasserstoffharz; Polymerisationsprodukt aus ungesättigten, aromatischen $C_9$- bis $C_{10}$-Kohlenwasserstoffen (Firma Rüttgers Chemicals) |
| Perkadox® BC 40BGR DD | Dicumylperoxid auf einem Kreide-Silicatträger, ca. 40Gew.-% Aktivsubstanzgehalt (Firma Akzo Nobel) |
| RB 810 | syndiotaktisches 1,2-Polybutadienhomopolymer (Schmelzflussindex 3g/10Min bei 150°C und einer Belastung mit 2,16kg; Schmelzpunkt 71°C) (Firma Japan Synthetic Rubber) |
| Sartomer® SR 350 | Trimethylolpropantrimethacrylat (Firma Sartomer) |
| Zink Oxide Activox® B | Zinkoxid (Reinheitsgrad von 99,9%) (Firma NRC Nordmann Rassmann) |

4.3 Auswertung

Die exakte Zusammensetzungen der verschiedenen Formulierungen sowie die Ergebnisse der Bestimmung des Expansionsverhaltens und des Ablaufverhaltens unter unterschiedlichen Einbrennbedingungen wurden in Tabelle 1 zusammengefasst.

Während die erfindungsgemäßen Zubereitungen E1 bis E3 unter den untersuchten Bedingungen Expansionswerte von 1400 - 2600 %, insbesondere unter Standard- und Überbrandbedingungen Werte von vorteilhaften 1950 - 2600 % aufweisen, zeigen die Vergleichsformulierungen VV1-VV4 ein deutlich geringeres Expansionsvolumen 200 - 2100 %. Insbesondere bei Überbrandbedingungen werden Expansionswerte der Vergleichsformulierungen VV1-VV4 von nur maximal 900 % erreicht.

Bei allen geprüften Einbrennbedingungen bleiben die Expansionswerte aller erfindungsgemäßen Formulierungen E1-E3 hingegen auf konstant hohem Niveau von mehr als 1400 %, während die Vergleichsformulierungen VV1-VV4 deutlich größere Schwankungen aufweisen; insbesondere bei Überbrandbedingungen (30 min @ 190 °C) ist ein Schrumpfen der Vergleichsformulierungen zu beobachten, was zu Undichtigkeiten im Anwendungsbereich führen kann.

Aufgrund der konstant hohen Expansionswerte der erfindungsgemäßen Zusammensetzungen E1-E3 ist es möglich, mit diesen Kavitäten vollständig und sicher abzudichten.

Weiterhin kann den Ergebnissen in Tabelle 1 entnommen werden, dass die erfindungsgemäßen Zusammensetzungen E1-E3 beim Einbrennen nicht ablaufen, abkippen oder absacken. Insbesondere in senkrechter Position bleiben die Schäume während des Einbrennvorgangs stabil. Die Vergleichsformulierungen VV2-VV4 zeigen dagegen während des Einbrennens ein starkes Ablaufen und Abkippen, so dass eine Kavität nicht vollständig in senkrechter Position damit gefüllt werden kann. VV1 zeigt zwar ebenfalls kein Ablaufen / kein Abkippen während des Einbrennens, dafür ist die Expansion, insbesondere unter Überbrandbedingungen nicht ausreichend, da der Schaum unvorteilhaft schrumpft.

**Patentansprüche**

**1.** Thermisch expandierbare Zubereitung, enthaltend, bezogen auf die Gesamtmasse der thermisch expandierbaren Zusammensetzung,

(a) mindestens 40 Gew.-% mindestens eines peroxidisch vernetzbaren binären Copolymers, enthaltend mindestens eine Monomereinheit ausgewählt aus Vinylacetat, (Meth)acrylsäuren und deren Derivaten, wobei das binäre Copolymer einem Schmelzflussindex von höchstens 3g/10min, welcher gemäß DIN EN ISO 1133 und mit einer Prüflast von 2,16kg und einer Prüftemperatur von 190°C bestimmt wird, aufweist,

(b) 0,2 bis 2 Gew.-% mindestens eines Peroxids,

(c) 5 bis 18 Gew.-% mindestens eines chemischen Treibmittels sowie

(d) 2 bis 20 Gew.-% mindestens eines Polymers auf Basis von einem oder mehreren Dienmonomeren, das einen Schmelzflussindex von mindestens 2g/10min, welcher gemäß DIN EN ISO 1133 und mit einer Prüflast von 2,16 kg und einer Prüftemperatur von 150 °C bestimmt wird, aufweist, und

(e) mindestens ein Terpolymer auf Basis mindestens eines ersten Monomers, ausgewählt aus den einfach oder mehrfach ungesättigten Kohlenwasserstoffen, und mindestens eines zweiten Monomers, ausgewählt aus den (Meth)acrylsäuren und deren Derivaten.

2. Thermisch expandierbare Zubereitung nach Anspruch 1, **dadurch gekennzeichnet, dass** das peroxidisch vernetzbare Polymer (a) ausgewählt ist aus Ethylen-Vinylacetat-Copolymeren, funktionalisierten Ethylen-Vinylacetat-Copolymeren, Ethylen-Butylacrylat-Copolymeren, funktionalisierten Ethylen-Butylacrylat-Copolymeren, Ethylen-Methylacrylat-Copolymeren, Ethylen-Ethylacrylat-Copolymeren, Ethylen-(Meth)acrylsäure-Copolymeren und Ethylen-2-Ethylhexylacrylat-Copolymeren.

3. Thermisch expandierbare Zubereitung nach einem der Ansprüche 1 bis 2, **dadurch gekennzeichnet, dass** sie als Komponente (a) ein Ethylen-Vinylacetat-Copolymer, vorzugsweise mit einem Vinylacetatanteil von 9 bis 22 Gew.-%, bezogen auf die Gesamtmasse des binären Copolymeren, enthält.

4. Thermisch expandierbare Zubereitung nach einem der Ansprüche 1 bis 3, **dadurch gekennzeichnet, dass** sie als Treibmittel ein Sulfonsäurehydrazid und/oder Azodicarbonamid enthält.

5. Thermisch expandierbare Zubereitung nach einem der Ansprüche 1 bis 4, **dadurch gekennzeichnet, dass** das Polymer (d) ausgewählt ist aus den Polybutadienhomopolymeren, den Polyisoprenhomopolymeren sowie den Butadien-Isoprencopolymeren.

6. Thermisch expandierbare Zubereitung nach einem der Ansprüche 1 bis 5, **dadurch gekennzeichnet, dass** das Polymer (d) syndiotaktisch aufgebaut ist.

7. Thermisch expandierbare Zubereitung nach einem der Ansprüche 1 bis 6, **dadurch gekennzeichnet, dass** das Terpolymer (e) eine dritte Monomereinheit ausgewählt aus Styrol, Glycidyl(meth)acrylsäureestern und Maleinsäureanhydrid aufweist.

8. Thermisch expandierbare Zubereitung nach einem der Ansprüche 1 bis 7, **dadurch gekennzeichnet, dass** sie weiterhin mindestens ein thermoplastisches Polymer enthält, das aus Erdölfraktionen gewonnen werden kann und eine Molmasse von höchstens 2500g/mol aufweist, bestimmt mittels Gelpermeationschromatographie (GPC) mit Polystyrol als Standard (Kohlenwasserstoffharz).

9. Thermisch expandierbare Zubereitung nach einem der Ansprüche 1 bis 8, **dadurch gekennzeichnet, dass** sie einen Expansionsgrad von mindestens 1000% bezogen auf das Volumen der Masse bei Raumtemperatur vor und nach 30-minütigem Erhitzen auf eine Aktivierungstemperatur von 170 °C aufweist.

10. Schottteil zum Abdichten von Hohlräumen eines Bauteils, **dadurch gekennzeichnet, dass** es eine Form aufweist, die an den Hohlraum angepasst ist, und eine thermisch expandierbare Zubereitung nach einem der Ansprüche 1 bis 9 aufweist.

11. Schottteil nach Anspruch 10, **dadurch gekennzeichnet, dass** es mindestens ein Befestigungselement aufweist, das eine Verankerung in dem Hohlraum ermöglicht.

12. Schottteil nach einem der Ansprüche 10 oder 11, **dadurch gekennzeichnet, dass** es keine Trägerstruktur aufweist.

13. Verfahren zur Abdichtung von Hohlräumen eines Bauteils, wobei ein Schottteil nach einem der Ansprüche 10 bis 12 in den Hohlraum eingebracht wird und anschließend auf eine Temperatur oberhalb von 130°C erhitzt wird, so dass die thermisch expandierbare Zubereitung expandiert und den Hohlraum abdichtet.

**14.** Verwendung eines Schottteils nach einem der Ansprüche 10 bis 12 zur akustischen Abdichtung von Hohlräumen in Bauteilen und/oder zur Abdichtung von Hohlräumen in Bauteilen gegen Wasser

**Claims**

**1.** A thermally expandable preparation, containing, based on the total weight of the thermally expandable composition:

(a) at least 40 wt.% of at least one peroxidically crosslinkable binary copolymer containing at least one monomer unit, selected from vinyl acetate, (meth)acrylic acids and derivatives thereof, wherein the binary copolymer has a melt flow index of no more than 3 g/10 min, which is determined in accordance with DIN EN ISO 1133 using a test load of 2.16 kg and a test temperature of 190°C,
(b) 0.2 to 2 wt.% of at least one peroxide,
(c) 5 to 18 wt.% of at least one chemical blowing agent and
(d) 2 to 20 wt.% of at least one polymer based on one or more diene monomers, which polymer has a melt flow index of no less than 2 g/10 min, which is determined in accordance with DIN EN ISO 1133 using a test load of 2.16 kg and a test temperature of 150°C, and
(e) at least one terpolymer based on at least one first monomer selected from the monounsaturated or polyunsaturated hydrocarbons, and on at least one second monomer, selected from the (meth)acrylic acids and derivatives thereof.

**2.** The thermally expandable preparation according to claim 1, **characterized in that** the peroxidically crosslinkable polymer (a) is selected from ethylene-vinyl acetate copolymers, functionalized ethylene-vinyl acetate copolymers, ethylene-butyl acrylate copolymers, functionalized ethylene-butyl acrylate copolymers, ethylene-methyl acrylate copolymers, ethylene-ethyl acrylate copolymers, ethylene-(meth)acrylic acid copolymers and ethylene-2-ethylhexyl acrylate copolymers.

**3.** The thermally expandable preparation according to one of claims 1 or 2, **characterized in that** said preparation contains as component (a) an ethylene-vinyl acetate copolymer, preferably having a vinyl acetate content of from 9 to 22 wt.%, based on the total weight of the binary copolymer.

**4.** The thermally expandable preparation according to one of claims 1 to 3, **characterized in that** said preparation contains as a blowing agent a sulfonic acid hydrazide and/or azodicarbonamide.

**5.** The thermally expandable preparation according to one of claims 1 to 4, **characterized in that** the polymer (d) is selected from polybutadiene homopolymers, polyisoprene homopolymers and butadiene-isoprene copolymers.

**6.** The thermally expandable preparation according to one of claims 1 to 5, **characterized in that** the polymer (d) has a syndiotactic structure.

**7.** The thermally expandable preparation according to one of claims 1 to 6, **characterized in that** the terpolymer (e) has a third monomer unit selected from styrene, glycidyl (meth)acrylic acid esters and maleic acid anhydride.

**8.** The thermally expandable preparation according to one of claims 1 to 7, **characterized in that** said preparation additionally contains at least one thermoplastic polymer that can be obtained from petroleum fractions and has a molar mass of no more than 2,500 g/mol, determined by means of gel permeation chromatography (GPC) using polystyrene as the standard (hydrocarbon resin).

**9.** The thermally expandable preparation according to one of claims 1 to 8, **characterized in that** said preparation has a degree of expansion of no less than 1,000 % based on the volume of the mass at room temperature before and after being heated for 30 minutes to an activation temperature of 170°C.

**10.** A baffle part for sealing cavities in a component, **characterized in that** said baffle part has a shape adapted to the cavity and comprises a thermally expandable preparation according to one of claims 1 to 9.

**11.** The baffle part according to claim 10, **characterized in that** said baffle part comprises at least one fastening element, which allows anchoring in the cavity.

12. The baffle part according to one of claims 10 or 11, **characterized in that** said baffle part does not have a carrier structure.

13. A method for sealing cavities in a component, wherein a baffle part according to one of claims 10 to 12 is introduced into the cavity and is then heated to a temperature above 130°C such that the thermally expandable preparation expands and seals the cavity.

14. The use of a baffle part according to one of claims 10 to 12 for acoustically sealing cavities in components and/or for sealing cavities in components against water.


**Revendications**

1. Composition thermiquement expansible contenant, sur la base de la masse totale de la composition expansible thermiquement,

   (a) au moins 40% en poids d'au moins un copolymère binaire, réticulable à l'aide d'un peroxyde, contenant au moins un motif monomère choisi parmi l'acétate de vinyle, les acides (méth)acryliques et leurs dérivés, le copolymère binaire ayant un indice de fluidité à l'état fondu de 3 g/10 min maximum qui est déterminée selon la norme DIN EN ISO 1133 et avec une charge d'essai de 2,16 kg et à une température d'essai de 190°C,
   (b) de 0,2 à 2% en poids d'au moins un peroxyde,
   (c) 5 à 18% en poids d'au moins un agent gonflant chimique, et
   (d) 2 à 20% en poids d'au moins un polymère à base d'un ou de plusieurs monomères diène ayant un indice de fluidité à l'état fondu d'au moins 2 g/10 min qui est déterminé selon la norme DIN EN 1133 et avec une charge d'essai de 2,16 kg et à une température d'essai de 150°C, et
   (e) au moins un terpolymère à base d'au moins un premier monomère choisi parmi les hydrocarbures monoinsaturés ou polyinsaturés et d'au moins un deuxième monomère choisi parmi les acides (méth)acryliques et leurs dérivés.

2. Composition thermiquement expansible selon la revendication 1, **caractérisé en ce que** le polymère (a) réticulable à l'aide d'un peroxyde est choisi parmi les copolymères éthylène-acétate de vinyle fonctionnalisés, les copolymères éthylène-acétate de vinyle, les copolymères éthylène-acrylate de butyle, les copolymères éthylène-acrylate de butyle fonctionnalisés, les copolymères éthylène-acrylate de méthyle, les Copolymères éthylène-acrylate d'éthyle, les copolymères éthylène-acide (méth)acrylique et les copolymères éthylène-acrylate de 2-éthylhexyle.

3. Composition thermiquement expansible selon l'une des revendications 1 à 2, **caractérisée en ce qu'**elle contient comme composant (a) un copolymère éthylène-acétate de vinyle, ayant de préférence une proportion d'acétate de vinyle de 9 à 22% en poids, par rapport à la masse totale des copolymères binaires.

4. Composition thermiquement expansible selon l'une des revendications 1 à 3, **caractérisée en ce qu'**elle contient comme agent gonflant un hydrazide d'acide sulfonique et/ou de l'azodicarbonamide.

5. Composition thermiquement expansible selon l'une des revendications 1 à 4, **caractérisée en ce que** le polymère (d) est choisi parmi les homopolymères polybutadiène, les homopolymères polyisoprène et les copolymères butadiène-isoprène.

6. Composition thermiquement expansible selon l'une des revendications 1 à 5, **caractérisée en ce que** le polymère (d) est réalisée sous forme syndiotactique.

7. Composition thermiquement expansible selon l'une des revendications 1 à 6, **caractérisée en ce que** le terpolymère (e) comporte un troisième motif monomère choisi parmi le styrène, les glycidylesters d'acides (méth)acryliques et l'anhydride maléique.

8. Composition thermiquement expansible selon l'une des revendications 1 à 7, **caractérisée en ce qu'**elle contient en outre au moins un polymère thermoplastique qui peut être obtenu à partir de fractions de pétrole et qui a un poids moléculaire de 2500 g/mol maximum, déterminée par chromatographie par perméation sur gel (GPC) avec du polystyrène sous forme standard (résine d'hydrocarbure).

9. Composition thermiquement expansible selon l'une des revendications 1 à 8, **caractérisée en ce qu'**elle a un degré d'expansion d'au moins 1000% par rapport au volume de la masse à la température ambiante avant et après 30 minutes de chauffage à une température d'activation de 170°C.

10. Elément d'étanchéité destiné à étanchéifier des cavités d'un composant, **caractérisé en ce qu'**il a une forme adaptée à la cavité et **en ce qu'**il contient une composition thermiquement expansible selon l'une des revendications 1 à 9.

11. Elément d'étanchéité selon la revendication 10, **caractérisé en ce qu'**il comprend au moins un élément de fixation qui permet l'ancrage dans la cavité.

12. Elément d'étanchéité selon l'une des revendications 10 ou 11, **caractérisé en ce qu'**il n'a pas de structure porteuse.

13. Procédé pour étanchéifier des cavités d'un composant, dans lequel un élément d'étanchéité selon l'une des revendications 10 à 12 est introduit dans la cavité et est ensuite chauffé à une température supérieure à 130°C de sorte que la composition thermiquement expansible s'expanse et ferme hermétiquement la cavité.

14. Utilisation d'un élément d'étanchéité selon l'une des revendications 10 à 12 destiné à réaliser l'étanchéité acoustique de cavités dans des composants et/ou à réaliser l'étanchéité des cavités dans des composants vis-à-vis de l'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200130906 A1
- WO 2008034755 A1